(19) Europäisches Patentamt
European Patent Office
Office européen des brevets

(11) **EP 0 900 819 A1**

(12) **EUROPÄISCHE PATENTANMELDUNG**

(43) Veröffentlichungstag:
10.03.1999 Patentblatt 1999/10

(51) Int. Cl.$^6$: **C08J 9/18**
// C08L23/12

(21) Anmeldenummer: 98113538.7

(22) Anmeldetag: 20.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 06.09.1997 DE 19739113

(71) Anmelder:
Gefinex Polymerschäume GmbH
33803 Steinhagen (DE)

(72) Erfinder:
• Wirobski, Reinhard
45768 Marl (DE)
• Träger, Michael, Dr.
45721 Haltern (DE)
• Günzel, Bernd, Dr.
45721 Haltern (DE)

(54) **Vorexpandierte polyolefinische Schaumpartikel**

(57) Polyolefinische Schaumpartikel, die sich über einen weiten Temperaturbereich zu Formteilen verarbeiten lassen, sind derart charakterisiert, daß das Verhältnis der Flächen zwischen Niedertemperaturpeak und Hochtemperaturpeak beim ersten Aufheizen in der DSC-Kurve einen Wert von maximal 3 ergibt, wobei die Schmelzwärme der sekundären Kristalle oberhalb von 10 J/g liegt.

Fig. 1

EP 0 900 819 A1

**Beschreibung**

Gegenstand der Erfindung sind polyolefinische Schaumpartikel, die sich über einen weiten Temperaturbereich zu Formteilen verarbeiten lassen.

Die Herstellung von Formteilen aus polyolefinischen Schäumen ist Stand der Technik. Dabei werden Schaumstoffpartikel lose oder unter Druck in eine geschlossene, aber durchlässige Form eingefüllt und mittels Bedampfung zur innigen Verschweißung gebracht.

Die Gestalt der Formteile kann dabei sehr unterschiedlich sein. In der Praxis weisen die Formteile sehr große Wanddickenunterschiede auf. So stehen beispielsweise 20 cm dicken Bereichen dünne Stege oder spitz zulaufende Zonen mit nur einigen Millimetern Wandstärke gegenüber.

Die Bedampfung muß so intensiv sein, daß die Schaumperlen im Inneren der dicken Bereiche vollständig miteinander verschweißt werden. Diese intensive Bedampfung führt in den dünnwandigen Bereichen aufgrund zu hoher und langer Temperaturbelastung zur Überbeanspruchung der Schaumperlen.

Es wird beobachtet, daß hierbei eine Schädigung der Schaumpartikel auftritt. Das Basismaterial überbläht oder es schmilzt an und das Zellgefüge wird teilweise oder ganz zerstört. Nach Abkühlung der Formteile kollabieren die Schaumperlen in diesen Bereichen.

Wird dagegen mit einer schonenden Bedampfung gearbeitet, ist die Verschweißung im Inneren der dicken Bereiche unzureichend. Zudem weisen die Oberflächen Zwickel auf und sind matt.

Darüber hinaus werden vom Markt verstärkt Formteile mit einer sehr glatten Oberfläche bis hin zur Kompaktierung der äußeren Materialschicht angefragt, wobei die Partikelstruktur nicht mehr erkennbar sein soll. Eine derartige deutliche Verbesserung der Oberflächengüte kann erzielt werden, wenn erhöhte Dampfdrücke bei verlängerter Bedampfungszeit angewendet werden. Dies führt in der Regel jedoch ebenfalls zur Schädigung der Schaumperlen.

Es stellte sich daher die Aufgabe, Schaumperlen aus polyolefinischem Material herzustellen, die in einem großen Verarbeitungsbereich ohne Schädigung verarbeitet werden können.

Überraschenderweise kann diese Aufgabe gelöst werden, wenn Schaumpartikel verwendet werden, bei denen das Verhältnis der Flächen zwischen Niedertemperaturpeak und Hochtemperaturpeak beim ersten Aufheizen in der DSC-Kurve einen Wert von maximal 3 ergibt, wobei die Schmelzwärme der sekundären Kristalle oberhalb von 10 J/g liegt. Die Schaumpartikel sind gegenüber verstärkter Bedampfung unempfindlich. Darüber hinaus wird beobachtet, daß die Formteile eine erwünscht glatte und glänzende, staubabweisende Oberfläche aufweisen.

Im Rahmen der Erfindung können als Polyolefin gemäß dem Stand der Technik Homo- und Copolymere insbesondere von Ethen, Propen und Buten-(1) verwendet werden wie beispielsweise Propen-Ethen- oder Propen-Buten-1-Randomcopolymere, Random-Terpolymere von Ethen, Propen und Buten-1, Ethen-Propen-Blockcopolymere sowie Ethen-Vinylacetat-Copolymere oder Ethen-Methylmethacrylat-Copolymere. Bevorzugt wird ein Ethen-Propen-Randomcopolymerisat mit 1 bis 15 Gew.-% Ethen und besonders bevorzugt mit 2 bis 5 Gew.-% Ethen eingesetzt. Die Schmelzflußrate gemäß DIN ISO 1133 bei 230 °C liegt üblicherweise im Bereich von 1 bis 30 g/10 min. und bevorzugt im Bereich von 5 bis 25 g/10 min..

Das Polymere kann Zusätze enthalten wie beispielsweise eine feste Schäumhilfe (EP-A-0 095 109); beispielhaft seien Ruß, Talkum, Magnesiumhydroxid oder Dibenzylidensorbitol genannt. Weitere mögliche Zusätze sind Verarbeitungshilfsmittel, Farbstoffe, Antistatika, flammhemmende Zusätze, Stabilisatoren oder andere Polymere.

Aus dem eingesetzten Kunststoffgranulat kann Partikelschaum nach allen Dispersionsschäumungs-Verfahren des Standes der Technik hergestellt werden. Im allgemeinen geht man hierbei so vor, daß

a) in einem druckfesten Reaktor eine Dispersion, die im wesentlichen aus dem Kunststoffgranulat sowie einem flüssigen Dispersionsmittel besteht, sowie ein Treibmittel vorgelegt wird,

b) eine Wärmebehandlung durchgeführt wird, und anschließend

c) die Dispersion durch eine Öffnung in einen Niederdruckraum entlassen wird, wobei die Polymerpartikel verschäumt werden.

Als Treibmittel kann gemäß dem Stand der Technik entweder ein flüchtiges organisches Treibmittel oder ein anorganisches Gas wie Stickstoff, Luft oder $CO_2$ verwendet werden.

Weiterhin kann die Dispersion, gemäß dem Stand der Technik, ein Dispergierhilfsmittel enthalten.

Bezüglich weiterer Einzelheiten sei auf die Europäischen Patentanmeldungen EP-A-0 053 333, 0 095 109, 0 113 903, 0 123 144, 0 168 954, 0 630 935 und 0 646 619 verwiesen.

Die so gewonnenen Schaumpartikel werden anschließend abgetrennt und getrocknet.

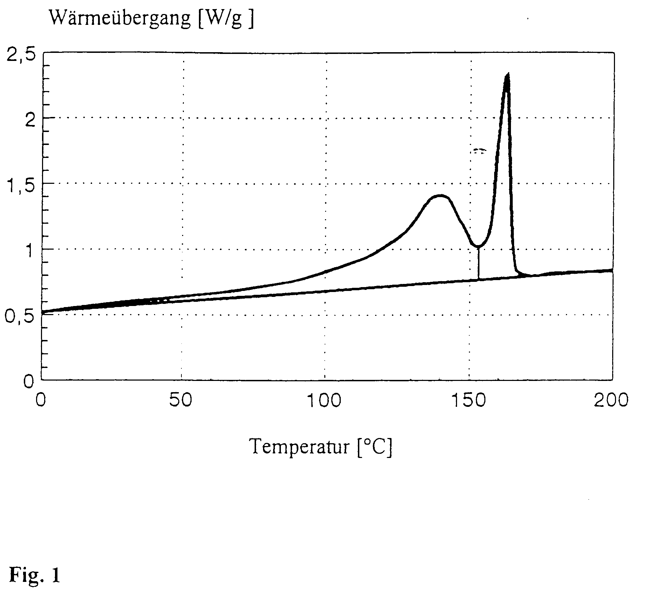

Die Aufnahme der DSC-Kurve erfolgt durch Dynamische Differential-Kalometrie (DKK) nach DIN 53765 und AN-SAA 0663, beispielsweise mit einem DSC 7-Gerät der Firma Perkin Elmer. Dabei wird eine bekannte Probenmenge von -30 °C auf 210 °C mit einer Geschwindigkeit von 20 K/min aufgeheizt und der Kurvenverlauf aufgenommen. Im rechten Winkel zur Basislinie werden die beiden Peaks durch eine Senkrechte im Minimum der Kurve getrennt. Die Flächen bzw. die zugehörigen Enthalpien der beiden Peaks werden ausgewertet und zueinander ins Verhältnis gesetzt. Eine typische Kurve ist als Fig. 1 beigefügt.

In einer bevorzugten Ausführungsform beträgt das Verhältnis der Flächen zwischen Niedertemperaturpeak und Hochtemperaturpeak maximal 2,7, besonders bevorzugt maximal 2,5 und ganz besonders bevorzugt maximal 2,0.

Das Verhältnis der Flächen zwischen Niedertemperaturpeak und Hochtemperaturpeak kann durch die Wahl der geeigneten Imprägniertemperatur und durch die Menge des Treibmittels beeinflußt werden, wie im experimentellen Teil gezeigt wird.

Zusätzlich ist es für den Zweck der Erfindung günstig, wenn die Schmelzwärme der sekundären Kristalle, die durch Integration des Hochtemperaturpeaks ermittelt wird, oberhalb von 15 J/g, bevorzugt oberhalb von 20 J/g und besonders bevorzugt oberhalb von 25 J/g liegt.

In einer weiteren bevorzugten Ausführungsform ist der Faktor, der sich aus folgender Formel ergibt, $\leq 100$:

$$\frac{\text{Fläche des Niedertemperaturpeaks}}{\text{Fläche des Hochtemperaturpeaks}} \times \text{Schüttdichte [g/l]}$$

Die Erfindung soll im folgenden durch Beispiele erläutert werden.

Die angegebenen Teile sind stets Gewichtsteile.

Beispiele 1 - 3 (nicht erfindungsgemäß):

Drei typische Muster von handelsüblichen Polypropylen-Schaumperlen werden durch DSC-Messung charakterisiert; siehe Tabelle 1. Bei der Verarbeitung zu Formteilen stellen sich die in der Tabelle 1 beschriebenen Nachteile ein.

Beispiele 4 - 7:

In einem 40l-Reaktor wird eine Suspension, bestehend aus 100 Teilen Wasser, 15 Teilen Ethylen-Propylen-Randomcopolymerisat, Treibmittel n-Butan wie unten angegeben, 0,3 Teilen Marlowet[®] R 40 und 0,1 Teilen Marlon[®] A 360 unter Rühren auf 133 °C erhitzt und 20 Minuten bei dieser Temperatur gerührt. Nach Ablauf der Haltezeit wird der Reaktordruck mit Stickstoff auf 28 bar erhöht und der Inhalt über eine Düse in einen Niederdruckraum ausgetragen.

Die gewünschten Schüttdichten werden hierbei durch Variation der Treibmittelmenge folgendermaßen eingestellt:

Beispiel 4:    6,45 Teile
Beispiel 5:    6,05 Teile
Beispiel 6:    5,34 Teile
Beispiel 7:    5,06 Teile

Die Ergebnisse der DSC-Messung sowie die Formteileigenschaften sind in der Tabelle 1 wiedergegeben.

Tabelle 1

| Bei-spiel | Niedertemp.-Peak (NT) | | Hochtemp.-Peak (HT) | | NT/HT [-] | Schütt-dichte [g/l] | Faktor[a] | Formteileigenschaften | | | |
|---|---|---|---|---|---|---|---|---|---|---|---|
| | [%] | [J/g] | [%] | [J/g] | | | | Temperatur-beständigkeit | Schwindung | Oberfläche | Verschweißung |
| 1 [b] | 85,3 | 80,3 | 14,7 | 14,0 | 5,80 | 19 | 110 | 0 | - | 0 | + |
| 2 [b] | 75,6 | 73,3 | 24,4 | 23,7 | 3,10 | 38 | 118 | 0/- | 0 | 0 | + |
| 3 [b] | 79,9 | 72,8 | 20,1 | 18,4 | 3,98 | 55 | 219 | - | 0 | 0 | + |
| 4 | 72,2 | 72,2 | 27,8 | 27,8 | 2,60 | 21 | 55 | + | + | + | + |
| 5 | 66,1 | 63,4 | 33,9 | 32,5 | 1,95 | 27 | 53 | + | + | + | + |
| 6 | 62,8 | 60,3 | 37,2 | 35,6 | 1,69 | 35 | 59 | + | + | + | + |
| 7 | 53,7 | 55,4 | 46,3 | 47,8 | 1,16 | 77 | 89 | + | + | + | + |

EP 0 900 819 A1

$$\text{a) Faktor} = \frac{\text{Fläche des Niedertemperaturpeaks}}{\text{Fläche des Hochtemperaturpeaks}} \times \text{Schüttdichte [g/l]}$$

b) nicht erfindungsgemäß

Die Formteileigenschaften werden an einem Formteil beurteilt, welches an verschiedenen Stellen Materialdikken von sowohl 10 cm als auch 0,5 cm aufweist. Es wird durch Bedampfung bei 4,5 bar während 20 Sekunden hergestellt.

Temperaturbeständigkeit

+      Keine Schädigung erkennbar, formstabil
0      Einzelne Schaumperlen geschädigt (geschrumpft), Neigung zum Verziehen
-      Schaumperlen sind weitestgehend geschädigt, Formteile sind stark geschrumpft

Schwindung (bezogen auf Werkzeug)

+      1,3 bis 2,0 % Schrumpf
0      2,0 bis 2,7 % Schrumpf
-      > 2,7 % Schrumpf

Oberfläche (visuelle Beurteilung)

+      glatt, glänzend, keine Zwickel zwischen den Schaumperlen, ausgeprägte Produktionshaut
0      glatt, vereinzelt Zwickel zwischen den Schaumperlen
-      matte, unebene Oberfläche mit hohem Anteil Zwickel

Verschweißung (Beurteilung der Bruchfläche)

+      Bruch zu > 85 % durch die Schaumperlen
0      Bruch zu 60 bis 85 % durch die Schaumperlen
-      Bruch zu < 60 % durch die Schaumperlen

Beispiele 8 - 13:

Die Beispiele zeigen, wie durch die Wahl der geeigneten Imprägniertemperatur das Flächenverhältnis von Niedertemperaturpeak zu Hochtemperaturpeak verändert werden kann, wobei ansonsten analog zu den Beispielen 4 - 7 vorgegangen wird. Die Ergebnisse gehen aus der Tabelle 2 hervor.

Tabelle 2

| Beispiel | Imprägniertemp | Niedertemp.-Peak [%] | NT/HT [-] | Formteileigenschaften | | | |
|---|---|---|---|---|---|---|---|
| | | | | Temperatur-beständigkeit | Schwindung | Oberfläche | Verschwei-ßung |
| 8 a) | 149,0 | 82,0 | 4,56 | - | - | - | + |
| 9 a) | 145,0 | 76,4 | 3,24 | 0 | 0 | 0 | + |
| 10 | 140,0 | 71,3 | 2,48 | + | 0 | 0 | + |
| 11 | 135,0 | 64,1 | 1,79 | + | + | + | + |
| 12 | 130,0 | 62,0 | 1,63 | + | + | + | + |
| 13 | 125,0 | 61,2 | 1,58 | + | + | + | + |

a) nicht erfindungsgemäß

**Patentansprüche**

1. Polyolefinische Schaumpartikel, bei denen das Verhältnis der Flächen zwischen Niedertemperaturpeak und Hochtemperaturpeak beim ersten Aufheizen in der DSC-Kurve einen Wert von maximal 3 ergibt, wobei die Schmelzwärme der sekundären Kristalle oberhalb von 10 J/g liegt.

2. Polyolefinische Schaumpartikel gemäß Anspruch 1,
   dadurch gekennzeichnet,
   daß das Polyolefin ein Homo- oder Copolymeres von Propen ist.

3. Polyolefinische Schaumpartikel gemäß Anspruch 2,
   dadurch gekennzeichnet,
   daß das Polyolefin ein Ethen-Propen-Randomcopolymerisat mit 1 bis 15 Gew.-% Ethen ist.

4. Polyolefinische Schaumpartikel gemäß einem der vorhergehenden Ansprüche,
   dadurch gekennzeichnet,
   daß die Schmelzwärme der sekundären Kristalle oberhalb von 15 J/g liegt.

5. Polyolefinische Schaumpartikel gemäß einem der vorhergehenden Ansprüche, dadurch gekennzeichnet, daß folgender Zusammenhang erfüllt ist:

$$\frac{\text{Fläche des Niedertemperaturpeaks}}{\text{Fläche des Hochtemperaturpeaks}} \times \text{Schüttdichte [g/l]} \leq 100.$$

6. Verwendung von polyolefinischen Schaumpartikeln gemäß einem der vorhergehenden Ansprüche zur Herstellung von Formteilen.

Fig. 1

**Europäisches Patentamt**

# EUROPÄISCHER RECHERCHENBERICHT

Nummer der Anmeldung

EP 98 11 3538

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 44 36 980 A (BASF AG) 18. April 1996<br>* Spalte 2, Zeile 20-25 *<br>* Ansprüche *<br>--- | 1-6 | C08J9/18<br>//C08L23/12 |
| A,D | EP 0 123 144 A (JAPAN STYRENE PAPER CORP) 31. Oktober 1984<br>* Ansprüche *<br>* Abbildung 1 *<br>----- | 1-6 | |

**RECHERCHIERTE SACHGEBIETE (Int.Cl.6)**

C08J

Der vorliegende Recherchenbericht wurde für alle Patentansprüche erstellt

| Recherchenort | Abschlußdatum der Recherche | Prüfer |
|---|---|---|
| DEN HAAG | 16. November 1998 | Oudot, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument